# EUROPÄISCHE PATENTSCHRIFT

(11) **EP 3 158 902 B1**
(45) Veröffentlichungstag und Bekanntmachung des Hinweises auf die Patenterteilung: **12.02.2020**
(21) Anmeldenummer: 15190689.8
(22) Anmeldetag: 21.10.2015
(51) Int. Cl.: A47J 42/40

(54) **WÄGEEINHEIT FÜR EINE KAFFEEBOHNENMÜHLE, KAFFEEBOHNENMÜHLE MIT INTEGRIERTER WÄGEEINHEIT UND VERFAHREN ZUM BETREIBEN EINER KAFFEEBOHNENMÜHLE**
SCALES UNIT FOR A COFFEE BEAN GRINDER, COFFEE BEAN GRINDER WITH INTEGRATED SCALES UNIT AND METHOD FOR OPERATING A COFFEE BEAN GRINDER
UNITÉ DE PESAGE POUR UN MOULIN À CAFÉ, MOULIN À CAFÉ AYANT UNE UNITÉ DE PESAGE INTÉGRÉE ET PROCÉDÉ DE FONCTIONNEMENT D'UN MOULIN À CAFÉ

(43) Veröffentlichungstag der Anmeldung: 26.04.2017
(73) Patentinhaber: Hemro International AG, 8184 Bachenbülach (CH)
(72) Erfinder: Dunkelberg, Oliver, 8836 Bennau (CH); Kaufmann, Christoph, 6214 Schenkon (CH)
(74) Vertreter: Piticco, Lorena

(56) Entgegenhaltungen:
- WO-A1-2012/138327
- WO-A1-2015/006244

## Beschreibung

Die Erfindung betrifft eine Wägeeinheit für eine Kaffeebohnenmühle, eine Kaffeebohnenmühle mit integrierter Wägeeinheit und ein Verfahren zum Betreiben einer Kaffeebohnenmühle nach dem Oberbegriff der unabhängigen Ansprüche.

Kaffeebohnenmühlen finden insbesondere bei der Zubereitung von frisch gebrühtem Kaffee, insbesondere von Espressospezialitäten wie Espresso, Cappuccino, Latte Macchiato etc. Anwendung. Es ist für eine vollkommene Geschmacksentwicklung allgemein erwünscht, dass für die Zubereitung die Kaffeebohnen unmittelbar vor dem Brühprozess gemahlen werden. Ferner ist, neben Mahlgrad der Kaffeebohnen und Anpressdruck im Sieb (sog. Tamperdruck) die Kaffeepulvermenge im Sieb für die perfekte Zubereitung entscheidend. Beispielsweise sind pro Tasse Espresso 7 g Kaffeepulver, für einen doppelten Espresso oder zwei Tassen Espresso entsprechend 14 g notwendig.

Bei Kaffeebohnenmühlen, welche derart konstruiert sind, dass Kaffeepulver direkt in den Siebträger gelangt, erfolgt die Dosierung entweder durch Mahlzeiteinstellung oder volumetrisch. So wird bei der Mahlzeiteinstellung zunächst empirisch ermittelt, wie lang der Mahlvorgang dauern soll, bis die gewünschte Kaffeepulvereinwaage in den Siebträger gelangt, und anschliessend wird immer für diese ermittelte Zeitdauer gemahlen. Es ist ersichtlich, dass eine solche indirekte Ermittlung der Kaffeepulvereinwaage von verschiedenen Parametern abhängt und zu grossen Abweichungen führen kann. Bei der volumetrischen Dosierung wird ebenfalls davon ausgegangen, dass die gewünschte Kaffeepulvereinwaage mit einem voreingestellten oder einstellbaren Volumen übereinstimmt. Kaffeepulver gelangt somit nach dem Mahlen in einen Vorratsbehälter. Durch Betätigung einer Dosiervorrichtung kann anschliessend das voreingestellte Volumen abgegeben werden.

Ein anderer Ansatz besteht darin, dass Kaffepulver direkt in einen Vorratsbehälter gelangt, welcher mit einer Wägezelle zusammenwirkt, so dass eine genaue Kaffeepulvereinwaage möglich ist. Eine derartige Vorrichtung ist beispielsweise unter der Bezeichnung "Vario-W" der Firma Baratza bekannt. Nachteilig ist hierbei, dass die Kaffeepulvereinwaage dann wieder aus dem Vorratsbehälter entnommen werden und in einem Sieb eines Siebträgers dosiert werden muss.

Die WO 2015/006244 offenbart eine Siebfilterträger- und Wiegeplattformvorrichtung zur Verwendung mit einer Kaffeebohnenmühle, wobei eine Wägezelle vorgesehen ist. Um eine Beschädigung der Wägezelle zu verhindern sind Begrenzungen vorgesehen,m welche eine Bewegung der Wägezelle beschränken.

Aus der WO 2012/138327 ist eine Kaffeemahl- und Wiegevorrichtung bekannt, welche über eine Gewichtsmessvorrichtung verfügt. Die Gewichtsmessvorrichtung umfasst ein Basisteil, welches mit einer Plattform für einen Siebträger verbunden ist.

Davon ausgehend ist es Aufgabe der Erfindung eine Vorrichtung der eingangs genannten Art anzugeben, welche die Nachteile des Bekannten vermeidet und insbesondere eine direkte Einwaage von Kaffeepulver in ein Sieb eines Siebträgers ermöglicht. Die Vorrichtung soll, ausserdem hochpräzise arbeiten und konstruktiv einfach sein. Schliesslich soll sich die Vorrichtung für eine Vielzahlt von Mühlen und Siebträgern eignen.

Die Aufgabe wird mit einer Wägeeinheit für eine Kaffeebohnenmühle mit den Merkmalen im Anspruch 1 gelöst.

Die Wägeeinheit umfasst eine Aufnahmevorrichtung für einen Siebträger, welche mit der Wägezelle in Wirkverbindung steht. Damit ist es möglich, das Gewicht des Siebträgers direkt zu erfasser.

Siebträger von Kaffeemaschinen-Halbautomaten umfassen in der Regel einen Griff und eine zylindrische Siebaufnahme mit einem Auslass für ein Sieb. Die Siebaufnahme bzw. der obere Rand des Siebs wird mittels eines Bajonettverschlusses mit einer Kaffeemaschine dicht verbunden, so dass Kaffee gebrüht werden kann.

Als Wägezelle eignen sich sämtliche Vorrichtungen, welche durch Ausgabe eines elektrischen Signals eine Gewichtsbestimmung ermöglichen. Insbesondere eignet sich eine Wägezelle, welche als Doppelbiegebalken ausgebildet ist. Derartige Wägezellen werden auch als Plattform-Wägezellen bezeichnet und ihre Funktion ist dem Fachmann allgemein bekannt.

Vorteilhaft weist die Wägeeinheit ein Wegbegrenzungsmittel auf, das zum Schutz vor Überlast mit dem auf Biegung beanspruchten Ende der Wägezelle zusammenwirkt. Wägezellen der betreffenden Bauart und Empfindlichkeit reagieren sensibel auf mechanische Krafteinwirkungen. Das Wegbegrenzungsmittel vermeidet auf einfache Weise eine Überdehnung der Wägezelle.

Eine besonders einfache Bauart kann dabei erzielt werden, weil erfindungsgemäss das auf Biegung beanspruchte Ende der Wägezelle mittels wenigstens einer Schraube mit der Aufnahmevorrichtung verschraubt ist, wobei die Schraube die Wägezelle durchdringt und wobei das Wegbegrenzungsmittel am Schraubenkopf angeordnet ist und mit einem Bodenabschnitt der Wägeeinheit zusammenwirkt. Der Schraubenschaft wird dabei eine Öffnung im Bodenabschnitt durchringen und am Schraubenkopf kann eine Anschlagscheibe angeordnet sein, welche als Wegbegrenzung dient.

Bevorzugt umfasst die Aufnahmevorrichtung Befestigungsmittel zur Aufnahme des Siebträgers. Diese Befestigungsmittel sind vorzugsweise derart einstellbar ausgebildet, dass sie an unterschiedliche Typen von Siebträger angepasst werden können. Beispielsweise können die Befestigungsmittel eine höhenverstellbare U-förmige Auflage aufweisen, auf welcher eine etwa zylindrisch ausgebildete Siebaufnahme des Siebträgers aufliegt. Denkbar ist allerdings auch eine Aufnahmevorrichtung, welche nur die Aufnahme eines einzigen Typs von Siebträger erlaubt.

Die Aufnahme des Siebträgers erfolgt derart, dass der Siebträger selbsttragend, d.h. nicht durch weitere Vorrichtungen oder Bauteile, abgestützt wird. Damit wird eine Vereinfachung des Kraftflusses in der Wägeeinheit erzielt.

Die Wägezelle ist bevorzugt in einem Gehäuse aufgenommen, welches mit Befestigungsmöglichkeiten zum Anbringen der Wägeeinheit an einer Kaffeebohnenmühle versehen ist. Dadurch wird die Nachrüstung von Kaffeebohnenmühlen ermöglicht. Die Wägezelle ist mit einem Ende am Gehäuse befestigt und mit dem anderen Ende an der Aufnahmevorrichtung befestigt, so dass durch Durchbiegung der Wägezelle das Gewicht der aufgehängten Masse und somit des Siebträgers, erfasst werden kann.

Die Aufnahmevorrichtung umfasst ferner bevorzugt einen Klemmabschnitt zur teilweisen Aufnahme eines umfänglichen oberen Randes der Siebaufnahme, so dass der Siebträger fest zwischen Unterseite und dem oberen Rand der Siebaufnahme eingeklemmt wird. Damit wird ein Formschluss gewährleistet, welcher Bewegungen des Siebträgers verhindert, welche die Messergebnisse verfälschen könnten.

Die Aufnahmevorrichtung umfasst bevorzugt einen Abschnitt mit einem sich verjüngenden Profil, welcher beim Einbau in einer Kaffeebohnenmühle direkt beim Mahlauslass angeordnet wird und als Fläche zum Ablenken von herabfallendem Kaffeepulver dient.

Die Aufnahmevorrichtung ist bevorzugt steigbügelförmig ausgebildet und bei einem Apexbereich des Bügels mit der Wägezelle verbunden. Steigbügelförmig bedeutet hier, dass die Aufnahmevorrichtung zwei Arme aufweist, die gegen den Apexbereich gekrümmt sind und deren freie, etwa parallele Enden durch einen Materialsteg miteinander verbunden sind. Im Apexbereich ist vorzugsweise ein Anschlussstück integriert, das eine feste Verbindung mit der Wägezelle erlaubt. Der Apexbereich befindet sich im bestimmungsgemässen Zustand unterhalb der Aufnahme für den Siebträger. Die Befestigung erfolgt bevorzugt mittels Schrauben. Durch diese Bauweise wird eine optimale Kraftübertragung in einer vertikalen Symmetrieebene der Wägezelle erreicht. Der Verbindungsbereich zwischen den beiden U-Schenkeln der Aufnahmevorrichtung weist vorteilhaft eine Fläche zum Ablenken von Kaffeepulver in das Sieb auf.

Vorzugsweise bildet die Fläche zum Ablenken von herabfallendem Kaffeepulver die dem Apexbereich gegenüberliegende Verbindung der beiden Seitenschenkel der steigbügelförmigen Aufnahmevorrichtung. Auf diese Weise wird ein kompaktes Bauteil gebildet, das sich leicht herstellen lässt und möglichst wenig Einzelteile aufweist. Dies ist auch im Hinblick auf unerwünschte Schwingungen sehr vorteilhaft. Die Aufnahmevorrichtung kann dabei als auf einer Frontseite geschlossenes und auf einer Rückseite offenes Spritzgussteil ausgebildet sein.

Auf diese Weise entsteht ein einseitig offener Hohlkörper, der mit Versteifungsrippen ausgefacht werden kann.

Die Wägeeinheit umfasst bevorzugt eine beispielsweise im Wesentlichen nierenförmige Auffangschale zum Auffangen von aus dem Siebträger abtropfender Flüssigkeit und herabfallendem Kaffeepulver. Die Auffangschale ist bevorzugt einfach entnehmbar und nicht mit der Aufnahmevorrichtung verbunden. Bevorzugt liegt die Auffangaschale einfach auf dem Gehäuse der Wägezelle auf.

Die in der Regel rechteckig ausgebildete Wägezelle ist vorteilhaft so angeordnet, dass sie in einer horizontalen Ebene liegt und parallel zum eingesetzten Siebhalter verläuft. Eine derartige Anordnung hat sich auch im Hinblick auf die vorhandenen Platzverhältnisse als vorteilhaft erwiesen. Diese Anordnung der Wägezelle ist jedoch nicht zwingend. Es wäre ohne weiteres denkbar, die Wägezelle vertikal, also stehend anzuordnen, wobei das Gewicht des Siebträgers am oberen freien Ende der Wägezelle angreift. Eine derartige Anordnung könnte im Hinblick auf unerwünschte Schwingungen sehr vorteilhaft sein, weil für die Krafteinleitung keine langen Hebel erforderlich sind.

Die erfindungsgemäss gestellte Aufgabe wird ferner mit einer Kaffeebohnenmühle mit den Merkmalen im Anspruch 8 gelöst.

Die Kaffeebohnenmühle umfasst eine Wägeeinheit und eine Aufnahmevorrichtung wie oben bereits beschrieben. Vorteile und bevorzugte Weiterbildungen gelten für eine erfindungsgemässe Kaffeebohnenmühle entsprechend.

Die Kaffeebohnenmühle umfasst einen Kaffeebohnenbehälter, eine elektrisch angetriebene Mahleinheit ME mit einem Mahlgutauslass, eine Steuereinheit SE zur Steuerung der Mahlheinheit und eine Aufnahmevorrichtung für einen Siebträger, welche derart angeordnet ist, dass Mahlgut aus dem Mahlgutauslass direkt in den Siebträger befördert wird.

Die Aufnahmevorrichtung steht erfindungsgemäss mit einer Wägezelle in Wirkverbindung, wobei die Wägezelle mit der Steuereinheit SE verbunden ist.

Die Steuereinheit SE kann sowohl über Draht als auch drahtlos mit der Wägezelle kommunizieren. Ferner ist es denkbar, dass die Wägezelle eine eigene Steuereinheit SE umfasst, welche wiederum mit der Steuereinheit SE der Kaffeebohnenmühle kommuniziert.

Bevorzugt ist ein Einfüllgewicht des Mahlguts über eine Benutzerschnittstelle einstellbar. Denkbar sind hier Drehschalter, ggf in Verbindung mit optischen Darstellungsmitteln wie z.B. einem Bildschirm. Auch kann ein Einfüllgewicht mit einer Tastatur oder dgl. eingegeben werden.

Bevorzugt sind mehrere Einfüllgewichte einstellbar und auswählbar, so dass beispielsweise je nach Siebträger zwischen einer Menge für einen einfachen oder doppelten Espresso ausgewählt werden kann.

Bevorzugt kann das Einfüllgewicht automatisch durch Siebträgererkennung ermittelt werden. Dabei wird ein Taragewicht des Siebträgers ermittelt und mit Daten einer Speichereinheit SP verglichen. Die Speichereinheit SP umfasst Datensätze, welche zumindest ein Taragewicht und ein zugehöriges Einfüllgewicht umfassen. Durch Ermittlung des Taragewichts wird das entsprechende Einfüllgewicht ausgewählt. Die Datensätze können auch weitere Daten enthalten. Beispielsweise ist es möglich, dass je nach Siebträgererkennung auch ein Mahlgrad der Mühle eingestellt wird.

Die Siebträgererkennung kann auch optisch oder durch Abtasten von für den Siebträger spezifischen Merkmalen, wie Kerben, Vorsprüngen und dgl. ermittelt oder bestätigt werden.

Die Aufgabe wird ferner von einem Verfahren gemäss Verfahrensanspruch 12 gelöst. Dabei wird eine Kaffeebohnenmühle wie oben beschrieben betrieben.

Das erfindungsgemässe Verfahren zum Betreiben einer Kaffeebohnenmühle umfassend einen Kaffeebohnenbehälter, eine elektrisch angetriebene Mahleinheit ME mit einem Mahlgutauslass, eine Steuereinheit SE zur Steuerung der Mahleinheit ME und eine Aufnahmevorrichtung für einen Siebträger, welche in Wirkverbindung mit einer Wägezelle steht, wobei die Wägezelle mit der Steuereinheit SE verbunden ist, umfasst die folgenden Schritte:
Zunächst wird ein Siebträger in die Aufnahmevorrichtung eingesetzt. Durch die Gewichtsänderung kann somit ein Taragewicht des Siebträgers ermittelt und von der Steuereinheit SE verarbeitet werden.

Nach Ermittlung des Taragewichts wird die Mahleinheit ME gestartet. Das Starten der Mahleinheit ME erfolgt bevorzugt automatisch, ggf. nach einer voreingestellten Wartezeit oder nachdem die Schwankungen des Taragewichts innerhalb eines festgelegten Intervalls liegen. Alternativ oder zusätzlich kann das Starten durch manuelle Freigabe über eine Benutzerschnittstelle erfolgen ggf. nachdem einem Benutzer akustisch und/oder optisch mitgeteilt worden ist, das das Taragewicht erfasst worden ist.

Da während des Betriebs der Mahleinheit ME Kaffeebohnen gemahlen werden und in den Siebträger gelangen, steigt das Gewicht des Siebträgers. Die Wägezelle erfasst ständig das Gewicht des Siebträgers. Die Steuereinheit SE vergleicht ständig das von der Wägezelle ermittelte Gewicht mit einem voreingestellten Einfüllgewicht und stoppt die Mahleinheit ME, sobald das voreingestellte Einfüllgewicht erreicht worden ist.

Das Erreichen des voreingestellten Einfüllgewichts kann durch Wiedergabe von optischen und/oder akustischen Signalen einem Benutzer signalisiert werden.

Bevorzugt wird das Einfüllgewicht in Abhängigkeit des ermittelten Taragewichts des leeren Siebträgers durch die Steuereinheit SE eingestellt. Bevorzugt ermittelt die Steuereinheit SE das Einfüllgewicht des Mahlguts durch Vergleich eines gemessenen Taragewichts des Siebträgers mit Daten einer Speichereinheit SP umfassend Datensätze bestehend aus zumindest Taragewicht und entsprechendem Einfüllgewicht (Sollwert). Durch eine Sieberkennung entfällt somit die Notwendigkeit einer Auswahl oder Einstellung des Einfüllgewichts.

Selbstverständlich kann es alternativ oder zusätzlich möglich sein, dass ein Einfüllgewicht durch einen Benutzer eingegeben werden kann.

Bei der Ermittlung des Einfüllgewichts kann die Steuereinheit SE selbstverständlich Korrekturen basierend auf Kennlinien durchführen. Beispielsweise ist es denkbar, dass je nach Mahlgrad eine Korrektur stattfindet. Ferner können Daten aus Sensoren, beispielsweise aus einer Feuchtigkeitsmessung der Kaffeebohnen, zur Korrektur herangezogen werden.

In einem weiteren bevorzugten Verfahrensschritt wird die Zeit bestimmt, die notwendig ist um ein für einen entsprechenden Siebträger vorbestimmtes Einfüllgewicht an Kaffeemehl in Abhängigkeit von der Mahlleistung (z.B. Gramm Kaffeemehl pro Sekunde) und der eingestellten Partikelgrössenverteilung (Einstellung der Mahlgradverstellung) zu mahlen. Aus der ermittelten Zeit wird ein Zeitsignal gebildet und mit diesem Zeitsignal werden vorzugsweise über eine Funkschnittstelle weitere Kaffeebohnenmühlen mit identischen Siebträgern angesteuert, welche nicht über eine Wägeeinheit verfügen. Diese weiteren Kaffeebohnenmühlen weisen vergleichbare Partikelgrössenverteilung und Mahlleistung auf und werden somit lediglich durch die Zeitvorgabe der Motorbetätigung gesteuert. Diese Master/Slave-Anordnung ermöglicht eine einfache Umstellung vorhandener konventioneller Mühlen mit nur einer erfindungsgemässen Mühle auf Dosierung mittels Gewicht. Eine derartige Steuerung ist auch unabhängig von der konstruktiven Ausgestaltung der erfindungsgemässen Wägeeinheit vorteilhaft.

Die Erfindung wird nachfolgend anhand eines bevorzugten Ausführungsbeispiels detaillierter beschrieben. Es zeigen:
- Figur 1: Eine perspektivische Ansicht einer erfindungsgemässen Kaffeebohnenbühle;
- Figur 2: Eine perspektivische Ansicht einer erfindungsgemässen Wägeeinheit mit eingesetztem Siebträger;
- Figur 3: Eine Frontansicht auf die Wägeeinheit gemäss Figur 2;
- Figur 4: Eine teilweise geschnittene Seitenansicht der Wägeeinheit gemäss Figur 2;
- Figur 4a: Ein stark vergrössertes Detail des auf Biegung belasteten Endes der Wägezelle;
- Figur 4b: Ein stark vergrössertes Detail des fest eingespannten Endes der Wägezelle;
- Figur 5: Die Wägeeinheit gemäss Figur 2 mit entferntem Siebträger;
- Figur 6: Die Wägeeinheit gemäss Figur 5 mit entfernter Auffangschale;
- Figur 7: Die Wägeeinheit gemäss Figur 6 mit entferntem Gehäuseoberteil und mit sichtbarere Wägezelle;
- Figur 8: Eine Seitenansicht der Wägeeinheit gemäss der Figur 7 ohne Gehäuse für die Wägezelle;
- Figur 9: Eine Ansicht der Frontseite der Aufnahmevorrichtung;
- Figur 10: Eine Ansicht der Rückseite der Aufnahmevorrichtung;
- Figur 11: Die schematische Darstellung einer alternativen Anordnung der Wägezelle; und
- Figur 12: Eine schematische Darstellung der funktionsweise einer Kaffeebohnenmühle

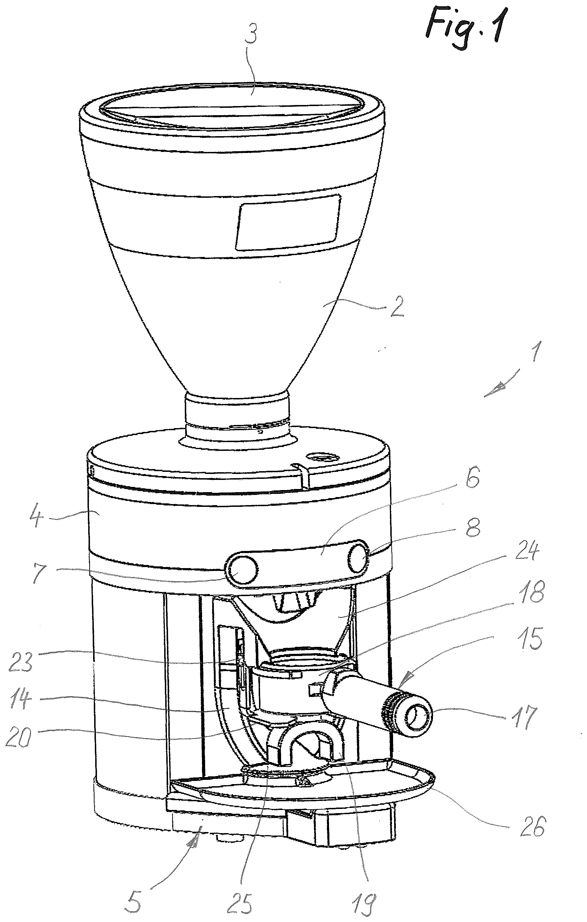

Die in der Figur 1 dargestellte Kaffeebohnenmühle 1 umfasst einen Kaffeebohnenbehälter 2 mit einem Deckel 3. Der Kaffeebohnenbehälter 2 ist als Trichter ausgebildet, dessen Trichterhalsöffnung über einer nicht sichtbaren Mahleinheit ME angeordnet ist. Kaffeebohnen gelangen somit durch Schwerkraft in die Mahleinheit ME.

Der Kaffeebohnenbehälter ist mit einem Mühlengehäuse 4 verbunden. Das Mühlengehäuse 4 beherbergt u.a. die Mahleinheit ME, eine Steuereinheit SE und eine Wägeeinheit 5, welche in den folgenden gesondert dargestellt ist.

Die Kaffeebohnenmühle umfasst ferner eine Benutzerschnittstelle 6, welche schematisch dargestellt ist. Durch die Benutzerschnittstelle 6 können Funktionen der Kaffeebohnenmühle ausgewählt und Einstellungen geändert werden. Ferner kann die Benutzerschnittstelle 6 Taster 7 und 8 zum Starten/Stoppen der Kaffeebohnenmühle 1 sowie zur Schnellauswahl einer Portionierungsmenge (z.B. Single-Shot, Double-Shot) aufweisen.

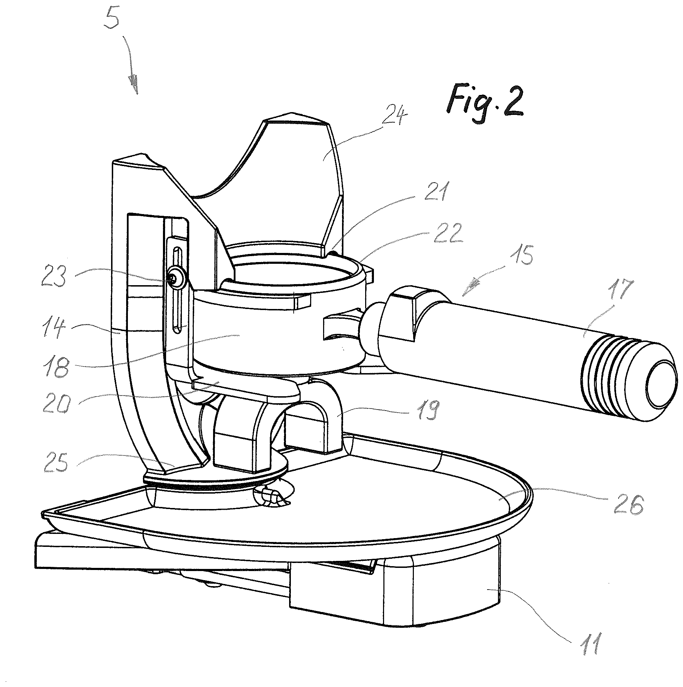

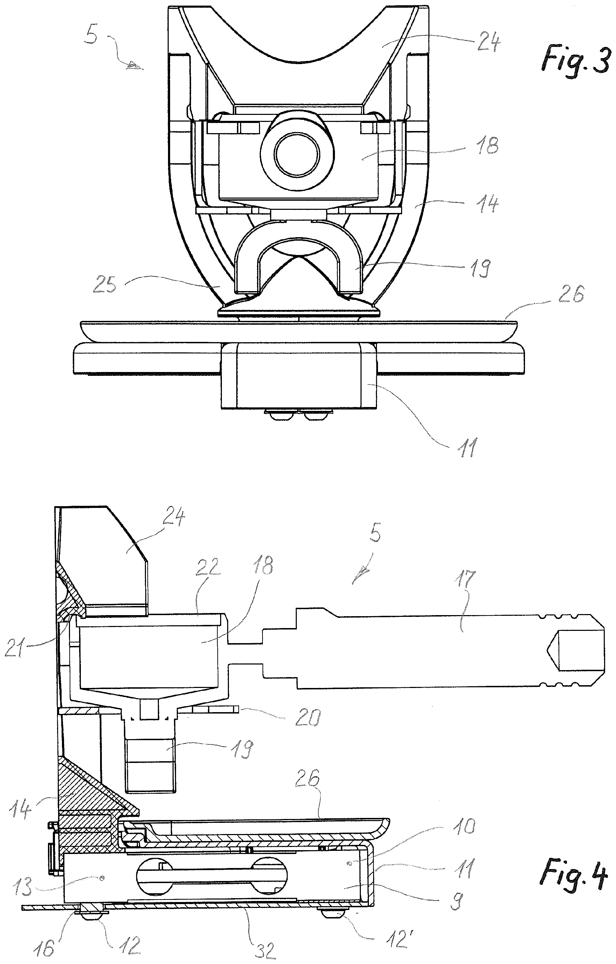

Die Wägeeinheit 5 gemäss den Figuren 2 und 3 besteht im Wesentlichen aus einer steigbügelförmigen Aufnahmevorrichtung 14, die einen Apexbereich 25 aufweist und deren Seitenschenkel am oberen Ende über eine trichterartige Fläche 24 verbunden sind. Diese Fläche geht unmittelbar über in einen teilkreisförmigen Klemmabschnitt 21, gegen den die umlaufende Kante 22 eines Siebträgers 15 pressbar ist. Die Siebaufnahme 18 liegt dabei auf einer U-förmigen Auflage 20, welche höhenverstellbar mittels Schrauben 23 an der Aufnahmevorrichtung 14 fixiert ist.

Der konventionelle Siebträger 15 einer Siebträgerkaffeemaschine verfügt ausserdem über einen Handgriff 17 und einen Auslass 19, welcher hier als Doppelauslass ausgebildet ist. In die Siebaufnahme 18 können auf an sich bekannte Weise verschiedene Siebe eingelegt werden.

Die Wägeeinheit 5 verfügt sodann über ein Gehäuse 11, welches gleichzeitig das Gestell bildet. Auf dem Gehäuse 11 liegt entfernbar eine etwa nierenförmige Auffangschale 26.

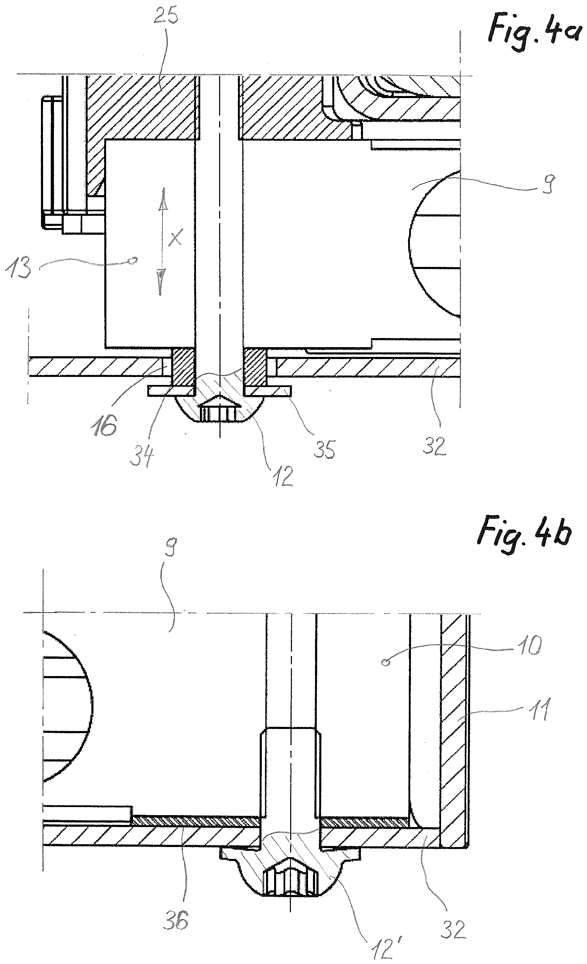

Wie insbesondere aus Figur 4 ersichtlich ist umfasst die Wägeeinheit 5 eine Wägezelle 9, welche als Doppelbiegebalken ausgebildet ist. Dehnungsmessstreifen und die Verbindung mit der Steuereinheit SE sind der Einfachheit halber nicht dargestellt. Das eine Ende 10 der Wägezelle 9 ist am Gehäuse 11 mittels Schrauben 12 befestigt und dort schwebend gelagert. Das andere Ende 13 der Wägezelle 9 ist ebenfalls mittels Schrauben 12 mit der Aufnahmevorrichtung 14 für den Siebträger 15 verbunden. Durch die Öffnung 16 im Gehäuse 11 kann die Wägezelle 9 frei schwingen, wenn die Wägeeinheit mit dem Gehäuse 4 der Kaffeebohnenmühle 1 verbunden ist.

Weitere Einzelheiten der Befestigung der Wägezelle sind aus den Figuren 4a und 4b ersichtlich. Figur 4a zeigt die Schraube 12, welche das auf Biegung belastete Ende 13 der Wägezelle 9 durchdringt und in den Apexbereich 25 eingeschraubt ist. Der Schraubenschaft durchdringt dabei auch die Öffnung 16 im Bodenabschnitt 32 des Gehäuses. Hinter dem Schraubenkopf ist eine Anschlagscheibe 35 angeordnet, deren Aussendurchmesser grösser ist als der Innendurchmesser der Öffnung 16. Zwischen der Anschlagscheibe 35 und der Unterseite der Wägezelle 9 ist eine Distanzbüchse 34 eingeklemmt. Zwischen der Unterseite der Wägezelle 9 und dem Bodenabschnitt 32 und auch zwischen der Anschlagscheibe 35 und dem Bodenabschnitt 32 verbleibt ein Zwischenraum, so dass sich das Ende 13 der Wägezelle 9 in Pfeilrichtung x um einen geringen Weg verschieben kann. Diese Anordnung dient als Wegbegrenzungsmittel, um die Wägezelle vor Überlast zu schützen. Dies ist besonders wichtig, weil durch die Hebelarmwirkung über die Aufnahmevorrichtung 14 derart grosse Kräfte auf die Wägezelle übertragbar wären, dass diese bei der hier erforderlichen Empfindlichkeit Schaden erleiden würde.

Die Figur 4b zeigt das fest eingespannte Ende 10 der Wägezelle 9. Die Schraube 12' ist hier direkt in die Wägezelle eingeschraubt, so dass diese gegen den Bodenabschnitt 32 gepresst wird. Zur Schaffung eines entsprechenden Freiraums am entgegengesetzten Ende 13 (Figur 4a) ist zwischen dem Bodenabschnitt 32 und der Unterseite der Wägezelle 9 eine Distanzunterlage 36 angeordnet.

Der eingesetzte Siebträger wird von der U-förmigen Auflage 20 gestützt. Die Aufnahmevorrichtung 14 umfasst ferner den Klemmabschnitt 21 für die umlaufende Kante 22 des Siebträgers 15. Dadurch kann der Siebträger 15 formschlüssig mit der Wägeeinheit 5 verbunden werden. Die Auflage 20 ist mittels Schauben 23 höhenverstellbar.

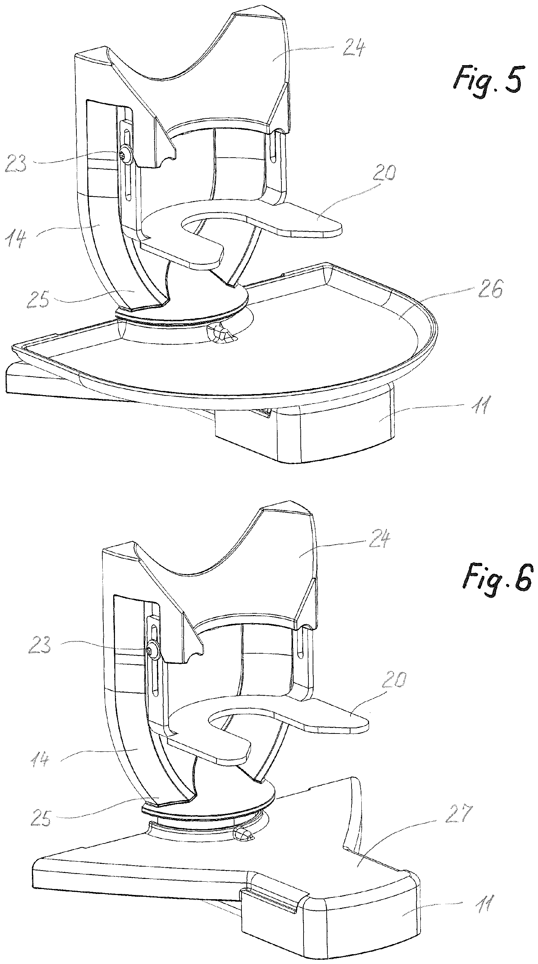

Weitere Details der Wägeeinheit ergeben sich aus den Figuren 5 bis 10. Figur 5 zeigt nochmals die komplette Wägeeinheit ohne den eingesetzten Siebträger. Deutlich erkennbar ist hier die U-förmige Auflage 20 mit den beiden seitlichen, mit Schlitzen versehenen Bügeln zur höhenverstellbaren Fixierung mit Hilfe der Schrauben 20. Die Fläche 20 ist als trichterförmige Rutsche für Kaffeepulver ausgebildet und verjüngt sich in Richtung des eingesetzten Siebhalters.

Die aufgelegte Auffangschale 26 nimmt herabfallendes Kaffeepulver oder auch Flüssigkeit auf, welche aus einem eingesetzten Siebhalter tropft. Diese Auffangschale besteht vorteilhaft aus Kunststoffmaterial.

Figur 6 zeigt die Grundform des Gehäuses 11, dessen Oberseite als Auflagefläche 27 für die Auffangschale 26 dient. Die Auffangschale ist auf der Unterseite vorteilhaft mit entsprechenden Begrenzungen für einen lagestabilen Sitz versehen.

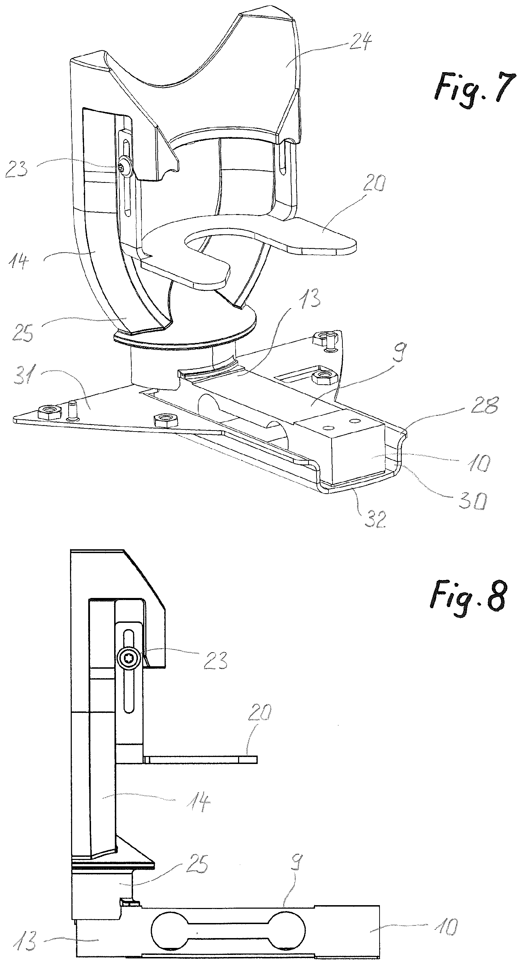

Wie aus Figur 7 ersichtlich ist, weist das Gehäuse einen Gehäusesockel 27 auf mit einer wannenartigen Vertiefung 30 zur Aufnahme der Wägezelle 9. Der Gehäusesockel 28 verfügt über Seitenflügel 31, an denen die gesamte Wägeeinheit mit dem Gehäuse der Kaffeemühle verbindbar ist.

Wie dargestellt, ist die quaderförmige, im Grundriss rechteckige Wägezelle so angeordnet, dass ihr hinteres Ende 13 im Apexbereich 25 mit der steigbügelförmigen Aufnahmevorrichtung 14 verbunden ist. Eine vertikale Symmetrieebene verläuft somit durch die Aufnahmevorrichtung 14 und durch die Wägezelle 9. Die Wägezelle 9 wird mit dieser Konstruktion ausschliesslich auf Biegung belastet und störende seitliche Torsionskräfte werden vermieden.

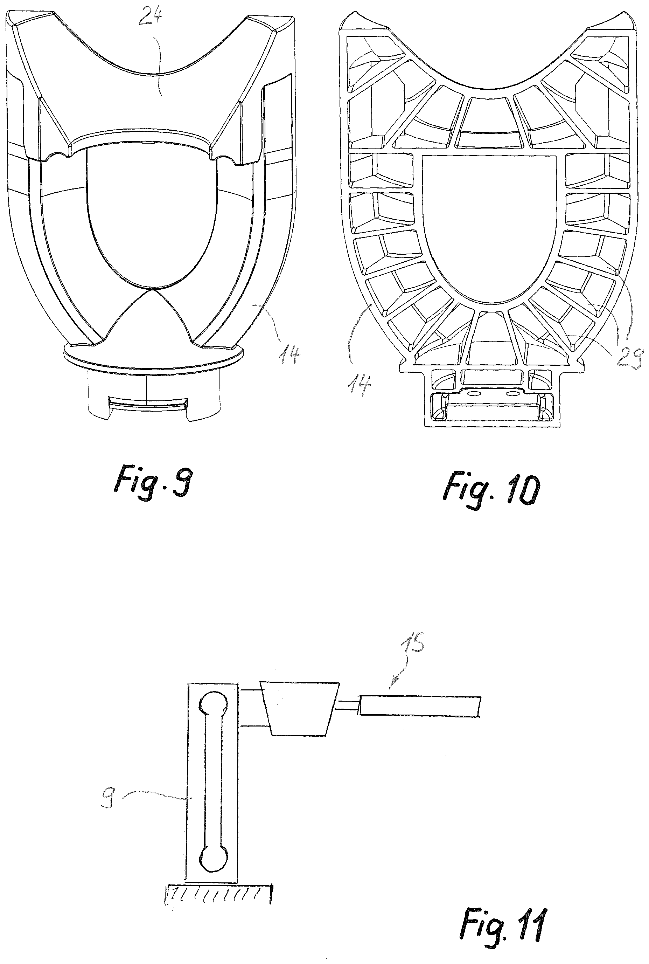

Die Figuren 9 und 10 zeigen die Aufnahmevorrichtung 14 ohne die daran befestigte U-förmige Auflage für den Siebträger. Wie dargestellt, handelt es sich um ein kompaktes Bauteil mit einer geschlossenen Frontseite und mit einer geöffneten Rückseite. Der so gebildete Hohlkörper ist mit Versteifungsrippen 29 versehen und wird dadurch sehr verwindungssteif. Ein derartiges Bauteil lässt sich besonders einfach in einem Spritzgussverfahren aus Kunststoffmaterial herstellen.

Figur 11 zeigt noch schematisch eine alternative vertikale Ausrichtung der Wägezelle 9, wobei die Last des Siebträgers 15 am oberen freien Ende der Wägezelle angreift.

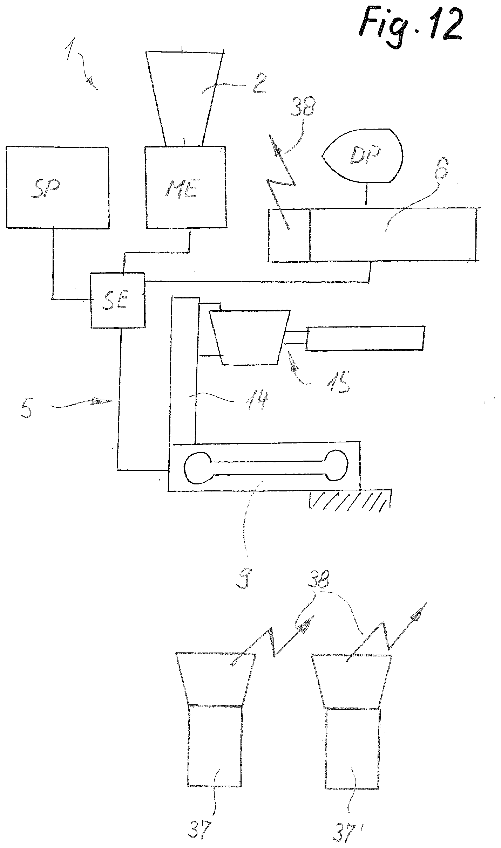

Figur 12 zeigt schematisch die Funktion einer erfindungsgemässen Kaffeebohnenmühle.

Die von der Wägezelle 9 ermittelte Last umfasst die Aufnahmevorrichtung 14 mit dem daran befestigten Siebträger 15. Eine Entsprechende Steuereinheit SE kann somit das Gewicht des Siebträgers 15 jederzeit bestimmen.

Die Steuereinheit SE ist ferner mit der Mahleinheit ME verbunden. So dass eine Kaffeepulvermenge im Siebträger 15 jederzeit überwacht werden kann. Die Dosierung einer gewünschten Menge an Kaffeepulver ist somit direkt im Siebträger 15 möglich.

Dabei ist eine Einfüllmenge an Kaffeepulver voreinstellbar oder wird durch Siebträgererkennung entsprechend eingestellt. Dabei wird das Taragewicht des leeren Siebträgers 15 ermittelt und nach der Erkennung die entsprechende, in einer Speichereinheit SP gespeicherte Einfüllmenge als Sollwert gesetzt.

Die Wägezelle 9 steht in Datenverbindung mit der Steuereinheit SE. Die Steuereinheit SE ist ferner mit der Benutzerschnittstelle 6, mit der Mahleinheit ME und der Speichereinheit SP verbunden. Nach dem Einsetzen des Siebträgers 15 in die Aufnahmevorrichtung 14 kann der Wäge- und Mahlprozess entweder automatisch oder durch Betätigen einer Starttaste an der Benutzerschnittstelle beginnen. Ein Display DP könnte vorgesehen sein, um jeweils das eindosierte Nettogewicht anzuzeigen. Eine Siebträgererkennung mittels einer erfindungsgemässen Wägeeinheit könnte auch für andere Vorrichtungen wie z.B. Kaffeemaschinen-Halbautomaten sehr vorteilhaft sein.

Figur 12 zeigt weiter symbolisch zwei konventionelle Kaffeebohnenmühlen 37 und 37', welche entsprechend den gleichen Parametern eingestellt sind wie die erfindungsgemässe Kaffeebohnenmühle 1 und welche einen identischen Siebträger aufnehmen können. Diese konventionellen Mühlen verfügen jedoch nicht über eine erfindungsgemässe Wägeeinheit 5.

Die Ansteuerung dieser konventionellen Mühlen erfolgt über ein Zeitsignal, das an der erfindungsgemässen Mühle ermittelt wird. Dazu wird die Zeit gemessen, welche für das Mahlen des gewünschten Einfüllgewichts erforderlich ist. Dieses Zeitsignal kann beispielsweise über eine Funkschnittstelle 38 an die konventionellen Mühlen 37 und 37' abgegeben werden. Auf diese Weise ist nur eine einzige Mühle mit Wägeeinheit zum exakten Eindosieren einer Kaffeemenge erforderlich, um die Mahlzeit der übrigen Mühlen vorzugeben. So kann sehr rasch auf unterschiedliche Kaffeesorten oder andere variablen Grössen umgestellt werden.

## Patentansprüche

1. Wägeeinheit (5) für eine Kaffeebohnenmühle (1) umfassend eine Wägezelle (9), wobei die Wägezelle (9) in Wirkverbindung mit einer Aufnahmevorrichtung (14) für einen Siebträger (15) eines Kaffeemaschinen-Halbautomaten steht, wobei sie ein Wegbegrenzungsmittel aufweist, das zum Schutz vor Überlast mit dem auf Biegung beanspruchten Ende (13) der Wägezelle (9) zusammenwirkt, **dadurch gekennzeichnet, dass** das auf Biegung beanspruchte Ende (13) der Wägezelle (9) mittels wenigstens einer Schraube (12) mit der Aufnahmevorrichtung (14) verschraubt ist, wobei die Schraube die Wägezelle (9) durchdringt, und dass das Wegbegrenzungsmittel am Schraubenkopf angeordnet ist und mit einem Bodenabschnitt (32) der Wägeeinheit zusammenwirkt, wobei der Schraubenschaft eine Öffnung (16) im Bodenabschnitt (32) durchdringt.

2. Wägeeinheit (5) nach Anspruch 1, **dadurch gekennzeichnet, dass** die Wägezelle (9) als Doppelbiegebalken ausgebildet ist.

3. Wägeeinheit nach Anspruch 1 oder 2, **dadurch gekennzeichnet, dass** die Aufnahmevorrichtung (14) Befestigungsmittel zur Aufnahme des Siebträgers umfasst, welche derart ausgebildet sind, dass sie an unterschiedliche Typen von Siebträger angepasst werden können.

4. Wägeeinheit (5) nach einem der Ansprüche 1 bis 3, **dadurch gekennzeichnet, dass** die Aufnahmevorrichtung (14) steigbügelförmig ausgebildet ist und bei einem Apexbereich (25) mit der Wägezelle (9) verbunden ist.

5. Wägeeinheit nach einem der Ansprüche 1 bis 4, **dadurch gekennzeichnet, dass** die Aufnahmevorrichtung (14) eine Fläche (24) zum Ablenken von herabfallendem Kaffeepulver umfasst.

6. Wägeeinheit nach Anspruch 4 und Anspruch 5, **dadurch gekennzeichnet, dass** die Fläche (24) die dem Apexbereich (25) gegenüberliegende Verbindung der beiden Seitenschenkel der steigbügelförmigen Aufnahmevorrichtung (14) bildet.

7. Wägeeinheit nach Anspruch 6, **dadurch gekennzeichnet, dass** die Aufnahmevorrichtung als auf einer Frontseite geschlossenes und auf einer Rückseite offenes Spritzgussteil ausgebildet ist.

8. Kaffeebohnenmühle (1) umfassend einen Kaffeebohnenbehälter (2), eine elektrisch angetriebene Mahleinheit (ME) mit einem Mahlgutauslass, eine Steuereinheit (SE) zur Steuerung der Mahleinheit (ME) und eine Wägeeinheit (9) gemäss einem der vorhergehenden Ansprüche, wobei die Aufnahmevorrichtung (14) derart angeordnet ist, dass Mahlgut aus dem Mahlgutauslass direkt in den Siebträger (15) befördert wird, und wobei die Wägezelle (9) mit der Steuereinheit (SE) verbunden ist.

9. Kaffeebohnenmühle (1) nach Anspruch 8, **dadurch gekennzeichnet, dass** ein Einfüllgewicht des Mahlguts über eine Benutzerschnittstelle (6) in Abhängigkeit des Siebträgers einstellbar ist.

10. Kaffeebohnenmühle (1) nach Anspruch 8, **dadurch gekennzeichnet, dass** ein Einfüllgewicht des Mahlguts durch Vergleich eines gemessenen Taragewichts des Siebträgers (15) mit Daten einer Speichereinheit (SP) umfassend Datensätze bestehend aus zumindest Taragewicht und entsprechendem Einfüllgewicht (Sollwert) ermittelbar ist.

11. Kaffeebohnenmühle (1) nach Anspruch 10, **dadurch gekennzeichnet, dass** die Datensätze ferner Daten betreffend Mahlwerkeinstellungen enthalten.

12. Verfahren zum Betreiben einer Kaffeebohnenmühle (1) nach einem der Ansprüche 8 bis 11, umfassend folgende Schritte:
- Einsetzen des Siebträgers (15) in die Aufnahmevorrichtung (14);
- Messen des Taragewichts des eingesetzten Siebträgers (15) durch die Wägezelle (9);
- Erfassen des ermittelten Taragewichts durch die Steuereinheit (SE);
- Starten der Mahleinheit (ME);
- Kontinuierliches Vergleichen des durch die Wägezelle (9) ermittelten Gewichts mit einem voreingestellten Einfüllgewicht durch die Steuereinheit (SE); wobei beim Erreichen des voreingestellten Einfüllgewichts die Steuereinheit (SE) die Mahleinheit (ME) stoppt.

13. Verfahren nach Anspruch 12, **dadurch gekennzeichnet, dass** das voreingestellte Einfüllgewicht in Abhängigkeit des ermittelten Taragewichts des leeren Siebträgers (15) durch die Steuereinheit (SE) eingestellt wird.

14. Verfahren nach Anspruch 13, **dadurch gekennzeichnet, dass** die Steuereinheit (SE) das Einfüllgewicht des Mahlguts durch Vergleich eines gemessenen Taragewichts des Siebträgers (15) mit Daten einer Speichereinheit (SP) umfassend Datensätze bestehend aus zumindest Taragewicht und entsprechendem Einfüllgewicht (Sollwert) ermittelt.

15. Verfahren nach einem der Ansprüche 12 bis 14, **dadurch gekennzeichnet, dass** zuerst die Zeit ermittelt wird, um ein für einen entsprechenden Siebträger vorbestimmtes Einfüllgewicht zu mahlen, dass daraus ein Zeitsignal gebildet wird und dass mit dem Zeitsignal vorzugsweise über eine Funkschnittstelle weitere Kaffeebohnenmühlen mit identischen Siebträgern angesteuert werden, welche nicht über eine Wägeeinheit verfügen.

## Claims

1. A scales unit (5) for a coffee bean grinder (1) comprising a load cell (9), wherein the load cell (9) is in operative connection with a receiving device (14) for a filter holder (15) of a semi-automatic coffee machine, wherein it comprises a travel limiting means that interacts with the end (13) of the load cell (9) being subject to bending for protection against overload, **characterized in that** the end (13) of the load cell (9) being subject to bending is screwed to the receiving device (14) by means of at least one screw (12), wherein the screw penetrates the load cell (9), and **in that** the travel limiting means is arranged on the screw head and interacts with a bottom section (32) of the scales unit, wherein the screw shaft penetrates an opening (16) in the bottom section (32).

2. The scales unit (5) according to claim 1, **characterized in that** the load cell (9) is designed as a double-bending beam.

3. The scales unit according to claim 1 or 2, **characterized in that** the receiving device (14) comprises fastening means for receiving the filter holder, which are configured such, that they can be adapted to different types of filter holders.

4. The scales unit (5) according to any one of claims 1 to 3, **characterized in that** the receiving device (14) is formed in the shape of a stirrup and is connected at an apex region (25) to the load cell (9).

5. The scales unit (5) according to any one of claims 1 to 4, **characterized in that** the receiving device (14) comprises a surface (24) for deflecting falling coffee powder.

6. The scales unit according to claim 4 and 5, **characterized in that** the surface (24) forms the connection of the two side legs of the stirrup-shaped receiving device (14) that is opposite to the apex region (25).

7. The scales unit according to claim 6, **characterized in that** the receiving device is designed as an injection moulded part being closed on a front side and being opened on a back side.

8. A coffee bean grinder (1) comprising a coffee bean container (2), an electrically driven grinding unit (ME) with an outlet for ground material, a controlling unit (SE) for controlling the grinding unit (ME) and a scales unit (9) according to any one of the preceding claims, wherein the receiving device (14) is arranged such, that the ground material is directly transferred from the outlet for the ground material into the filter holder (15), and wherein the load cell (9) is connected to the controlling unit (SE).

9. The coffee bean grinder (1) according to claim 8, **characterized in that** a filling weight of the ground material can be set depending on the filter holder via a user interface (6).

10. The coffee bean grinder (1) according to claim 8, **characterized in that** a filling weight of the ground material can be determined by a comparison between a measured tara weight of the filter holder (15) with data in a storage unit (SP) comprising data sets consisting of at least tara weight and the corresponding filling weight (set value).

11. The coffee bean grinder (1) according to claim 10, **characterized in that** the data sets further comprise data concerning grinder settings.

12. A method of operating a coffee bean grinder (1) according to any one of claims 8 to 11, comprising the following steps:
- Inserting the filter holder (15) into the receiving device (14);
- Measuring the tara weight of the inserted filter holder (15) by the load cell (9);
- Detecting the determined tara weight by the controlling unit (SE);
- Starting of the grinding unit (ME);
- Continuously comparing the weight determined by the load cell (9) with a preset filling weight by the controlling unit (SE); wherein, upon reaching the preset filling weight, the controlling unit (SE) stops the grinding unit (ME).

13. The method according to claim 12, **characterized in that** the preset filling weight is set in dependence of the determined tara weight of the empty filter holder (15) by the controlling unit (SE).

14. The method according to claim 13, **characterized in that** the controlling unit (SE) determines the filling weight of the ground material by comparing a measured tara weight of the filter holder (15) with data of a storage unit (SP) comprising data sets that consist of at least tara weight and corresponding filling weight (set value).

15. The method according to any one of claims 12 to 14, **characterized in that** first the time is determined to grind a predetermined filling weight for a corresponding filter holder, that a time signal is generated therefrom, and that further coffee bean grinders with identical filter holders that do not comprise a scales unit are controlled with the time signal preferably via a radio interface.

## Revendications

1. Une unité de pesée (5) pour un moulin à grains de café (1) comprenant une cellule de charge (9), **caractérisée en ce que** la cellule de charge (9) est en liaison fonctionnelle avec un dispositif de réception (14) pour un porte-filtre (15) d'une machine à café semi-automatique, dans laquelle elle possède un moyen de limitation de trajectoire qui interagit avec l'extrémité (13) de la cellule de charge (9) soumise à de la flexion afin de se protéger contre les surcharges, **caractérisée en ce que** l'extrémité (13) de la cellule de charge (9) soumise à de la flexion est vissée sur le dispositif de réception (14) au moyen d'au moins une vis (12), dans laquelle la vis pénètre dans la cellule de charge (9) et **en ce que** le moyen de limitation de trajectoire est agencé sur la tête de vis et interagit avec une partie inférieure (32) de l'unité de pesée, dans laquelle la tige de vis pénètre une ouverture (16) dans la partie inférieure (32).

2. L'unité de pesée (5) selon la revendication 1, **caractérisée en ce que** la cellule de charge (9) est conçue comme une poutre à double flexion.

3. L'unité de pesée (5) selon l'une des revendications 1 ou 2, **caractérisée en ce que** le dispositif de réception (14) comprend des moyens de fixation pour recevoir un porte-filtre, qui sont conçus de sorte à pouvoir être adaptés à différents types de porte-filtres.

4. L'unité de pesée (5) selon l'une des revendications 1 ou 3, **caractérisée en ce que** le dispositif de réception (14) est réalisé en forme d'un étrier et est relié à la cellule de charge (9) au niveau d'une zone apicale (25).

5. L'unité de pesée (5) selon l'une des revendications 1 à 4, **caractérisée en ce que** le dispositif de réception (14) comprend une surface (24) pour dévier la poudre de café tombante.

6. L'unité de pesée selon la revendication 4 et 5, **caractérisée en ce que** la surface (24) forme la connexion des deux pieds latéraux du dispositif de réception en forme d'étrier (14) opposé à la région apicale (25).

7. L'unité de pesée selon la revendication 6, **caractérisée en ce que** le dispositif de réception est conçu comme une pièce moulée par injection qui est fermée sur un côté avant et ouverte sur un côté arrière.

8. Un moulin à grains de café (1) comprenant un récipient à grains de café (2), une unité de broyage à entraînement électrique (ME) avec une sortie de matériel broyé, une unité de commande (SE) pour commander l'unité de broyage (ME) et une unité de pesée (9) selon l'une quelconque des revendications précédentes, dans lequel le dispositif de réception (14) est agencé de sorte que le matériel broyé est directement transféré depuis la sortie de matériel broyé dans le porte-filtre (15), et dans lequel la cellule de charge (9) est connectée à l'unité de commande (SE).

9. Moulin à grains de café (1) selon la revendication 8, **caractérisé en ce que** le poids de remplissage du matériel broyé peut être réglé via une interface utilisateur (6) en fonction du porte-filtre.

10. Moulin à grains de café (1) selon la revendication 8, **caractérisé en ce qu'**un poids de remplissage du matériel broyé peut être déterminé en comparant un poids de tare mesuré du porte-filtre (15) avec des données provenant d'une unité de stockage (SP) comprenant des données consistant au moins du poids de tare et du poids de remplissage correspondant (point de consigne).

11. Moulin à grains de café (1) selon la revendication 10, **caractérisé en ce que** les données contiennent en outre des données relatives aux réglages du moulin.

12. Procédé pour faire fonctionner un moulin à grains de café (1) selon une des revendications 8 à 11, comprenant les étapes suivantes
- insérer le porte-filtre (15) dans le dispositif de réception (14);
- mesurer le poids de tare du porte-filtre (15) inséré par la cellule de charge (9);
- détecter le poids de tare déterminé par l'unité de contrôle (SE);
- démarrer l'unité de broyage (ME);
- comparaison continue du poids déterminé par la cellule de charge (9) avec un poids de remplissage préréglé par l'unité de commande (SE); dans lequel l'unité de commande (SE) arrête l'unité de broyage (ME) lorsque le poids de remplissage préréglé est atteint.

13. Procédé selon la revendication 12, **caractérisé en ce que** le poids de remplissage préréglé est fixé par l'unité de commande (SE) en fonction du poids de tare déterminé du porte-filtre (15) vide.

14. Procédé selon la revendication 13, **caractérisé en ce que** l'unité de commande (SE) détermine le poids de remplissage du matériel broyé en comparant un poids de tare mesuré du porte-filtre (15) avec des données provenant d'une unité de stockage (SP) comprenant des données consistant d'au moins un poids de tare et un poids de remplissage correspondant (point de consigne).

15. Procédé selon l'une des revendications 12 à 14, **caractérisé en ce que** d'abord le temps pour broyer un poids de remplissage prédéterminé pour un porte-filtre correspondant est déterminé, qu'un signal horaire est formé à partir de celui-ci et que d'autres moulins à grains de café avec des porte-filtres identiques qui ne comportent pas d'unité de pesée sont utilisés avec le signal horaire de préférence via une interface radio.
